# EUROPEAN PATENT APPLICATION

(11) **EP 1 199 721 A2**
(43) Date of publication of application: **24.04.2002**
(21) Application number: 01308048.6
(22) Date of filing: 21.09.2001
(51) Int. Cl.: G11B 27/32, G11B 20/12, G11B 20/10

(54) **Audio data recording disc**

(30) Priority: 19.10.2000 JP 2000319368
(71) Applicant: Victor Company of Japan, Ltd., Yokohama 221-0022 (JP)
(72) Inventor: Fuchigami, Norihiko, Kamakura-shi, Kanagawa-ken (JP)
(74) Representative: Dempster, Benjamin John Naftel

(57) **Abstract**

An audio data recording disc stores audio data and a text data manager. The text data manager contains an item text. The item text includes a first ID code signal and a second ID code signal. The first ID code signal indicates a main classification rank of an item type of contents represented by the audio data. The second ID code signal relates to a sub classification rank of the item type which is subordinate to the main classification rank.

## Description

This invention relates to a recording disc such as an optical disc which stores audio data and text data.

There are DVD-RW discs and DVD-RAM discs. The VIDEO RECORDING standards (DVD-VR standards) prescribe the format of recording video data on a DVD-RW disc or a DVD-RAM disc.

According to the DVD-VR standards, video data are recorded on a disc as video objects (VOBs). The disc is also loaded with original management data and user defined management data. The original management data represent an original PGC (program chain) used for sequentially reproducing VOBs from the disc in an order equal to that of the recording of the VOBs on the disc. The user defined management data represent a user defined PGC or PGCs. Each user defined PGC relates to ones among the VOBs and portions of the VOBs which are selected by a user. The user defined PGC is used for sequentially reproducing the selected VOBs and the selected portions of the VOBs in an order desired by the user. On each disc, there is only one original PGC and one or more user defined PGCs.

The DVD-VR standards are unsuited for the recording of high-quality audio data on a disc. According to the DVD-VR standards, it is mandatory that each VOB contains a video stream. Thus, it is difficult to record only audio data on a disc. Regarding audio data, the DVD-VR standards support only 2-channel linear PCM audio data and compressed audio data. The DVD-VR standards do not support high-quality linear PCM audio data having more than 2 channels.

It is an object of this invention to provide a recording disc storing audio data and text data and being compatible with a DVD-VR disc.

A first aspect of this invention provides an audio data recording disc storing audio data and a text data manager, the text data manager containing an item text, the item text including a first ID code signal and a second ID code signal, the first ID code signal indicating a main classification rank of an item type of contents represented by the audio data, the second ID code signal relating to a sub classification rank of the item type which is subordinate to the main classification rank.

A second aspect of this invention is based on the first aspect thereof, and provides an audio data recording disc wherein the first ID code signal is selected from ID code signals representing fixed main genres and an ID code signal representing that a main genre of the contents is defined by a user, and the item text includes a text, and wherein when the first ID code signal is the ID code signal representing that the main genre of the contents is defined by the user, the text included in the item text indicates the main genre defined by the user.

A third aspect of this invention is based on the first aspect thereof, and provides an audio data recording disc wherein the second ID code signal represents that a sub genre of the contents which is subordinate to a main genre thereof is defined by a user, and the item text includes a text indicating the sub genre defined by the user.

A fourth aspect of this invention provides an audio data recording disc storing audio data and a text data manager, the text data manager containing a first item text and a second item text, the first item text including a first ID code signal, the second item text including a second ID code signal, the first ID code signal indicating a main genre of contents represented by the audio data, the second ID code signal relating to a sub genre of the contents which is subordinate to the main genre, wherein the first ID code signal is selected from ID code signals representing fixed main genres, and wherein the second ID code signal represents that the sub genre is defined by a user, and the second item text includes a text indicating the sub genre defined by the user.

A fifth aspect of this invention provides an audio data recording disc storing audio data and a text data manager, the text data manager containing an item text, the item text including a first ID code signal and a second ID code signal, the first ID code signal indicating a main genre of an item in contents represented by the audio data, the second ID code signal relating to a sub genre of the item which is subordinate to the main genre.

A sixth aspect of this invention is based on the fifth aspect thereof, and provides an audio data recording disc wherein the first ID code signal is selected from ID code signals representing fixed main genres and an ID code signal representing that the main genre is defined by a user, and the item text includes a text, and wherein when the first ID code signal is the ID code signal representing that the main genre is defined by the user, the text included in the item text indicates the main genre defined by the user.

A seventh aspect of this invention is based on the fifth aspect thereof, and provides an audio data recording disc wherein the second ID code signal represents that the sub genre is defined by a user, and the item text includes a text indicating the sub genre defined by the user.

Fig. 1 is a diagram of the structure of directories and files on a related-art recording disc which is prescribed by the DVD-VR standards.

Fig. 2 is a diagram of the details of a text data manager TXTDT_MG.

Fig. 3 is a diagram of a first form of one information piece indicating one item text IT_TXT in Fig. 2.

Fig. 4 is a diagram of a second form of one information piece indicating one item text IT_TXT in Fig. 2.

Fig. 5 is a diagram of a third form of one information piece indicating one item text IT_TXT in Fig. 2.

Fig. 6 is a diagram of the relation among ID code numbers (ID code words), item types, and item names which is prescribed by the DVD-VR standards.

Fig. 7 is a diagram of a specific example of the details of one information piece indicating one item text IT_TXT in Fig. 2.

Fig. 8 is a diagram of the details of original PGC information (original PGCI) being data representing an original PGC.

Fig. 9 is a diagram of the structure of directories and files on a DVD-AR disc according to an embodiment of this invention.

Fig. 10 is a diagram of the relation among ID code numbers (ID code words), item types, and item names in the embodiment of this invention.

Fig. 11 is a diagram of a first form of one information piece indicating one item text IT_TXT in the embodiment of this invention.

Fig. 12 is a diagram of a second form of one information piece indicating one item text IT_TXT in the embodiment of this invention.

Fig. 13 is a diagram of a third form of one information piece indicating one item text IT_TXT in the embodiment of this invention.

Fig. 14 is a diagram of a fourth form of one information piece indicating one item text IT_TXT in the embodiment of this invention.

Fig. 15 is a diagram of a fifth form of one information piece indicating one item text IT_TXT in the embodiment of this invention.

Fig. 16 is a block diagram of a recording and reproducing apparatus (a recordable player or a disc drive) according to the embodiment of this invention.

There now follows a detailed description of embodiments of the invention by way of example

Related art or background art which is not prior art to this invention will be explained below for a better understanding of this invention.

"DVD Specifications for Rewritable/Re-recordable Discs, Part 3 VIDEO RECORDING, Version 1.0" which are copy-protected indicate that a plurality of files are recorded on a DVD-RW disc or a DVD-RAM disc in conformity with the DVD-VR standards.

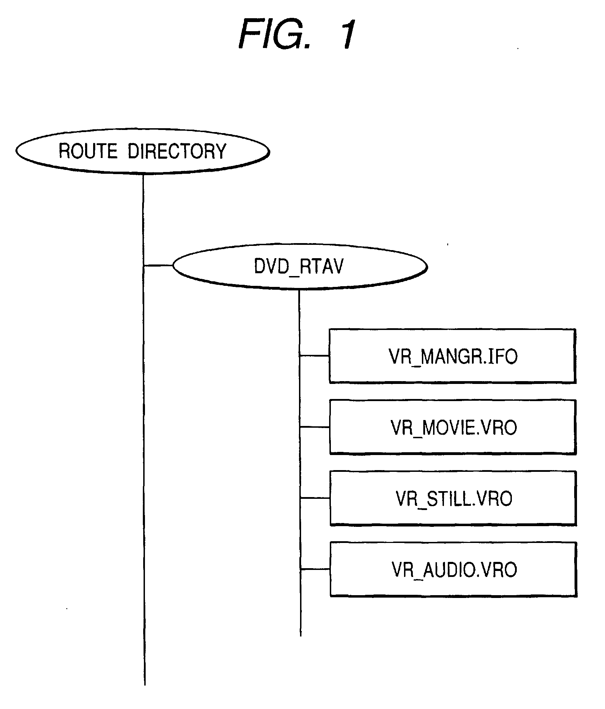

Fig. 1 shows the structure of directories and files on a disc which is prescribed by the DVD-VR standards. As shown in Fig. 1, there is a route directory under which a DVD_RTAV directory is placed as a sub directory. The DUD_RTAV directory contains a VR_MANGR.IFO file for storing all recording and reproducing management data including data representative of an original PGC (program chain) and data representative of a user defined PGC or PGCs.

The DVD_RTAV directory further contains a VR_MOVIE.VRO file, a VR_STILL.VRO file, and a VR_AUDIO.VRO file. Video data are stored in the VR_MOVIE.VRO file as video objects (VOBs). Still-picture data (data representing sill pictures) are stored in the VR_STILL.VRO file. Additional audio data related to the still pictures are stored in the VR_AUDIO.VRO file. In this way, the contents data (including the video data, the still-picture data, and the additional audio data) and the recording and reproducing management data are separately recorded on the disc on a file-by-file division basis. Thus, the order of reproducing the contents data can be decided by the user defined PGC or PGCs while the contents data remain unchanged.

The VR_MANGR.IFO file includes a text data manager (a text data management structure) TXTDT_MG representing the type of the contents recorded on the disc. The type of the contents is determined by the genre of the contents and the source providing the contents.

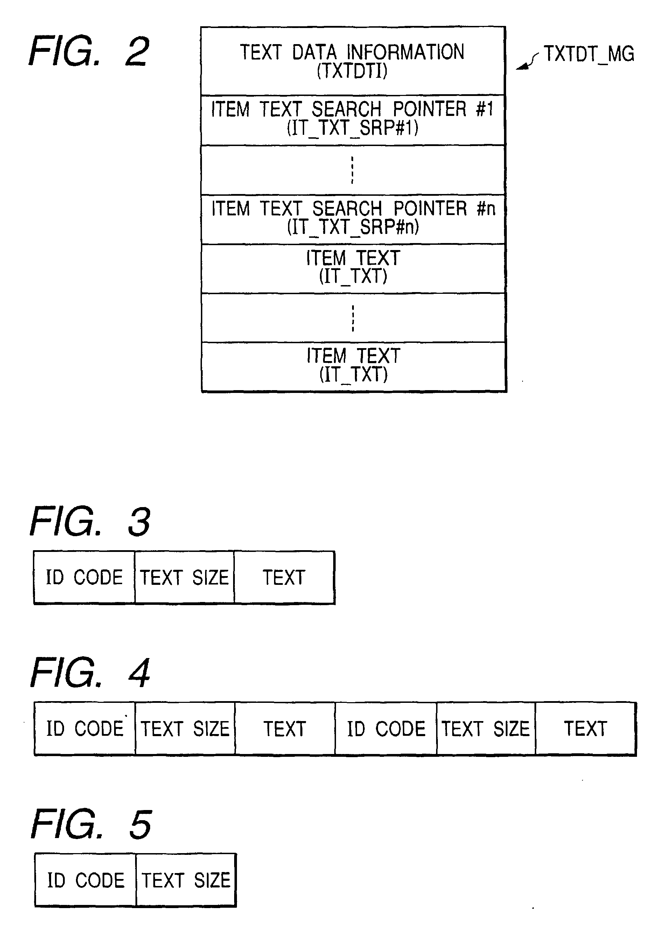

Fig. 2 shows the details of the text data manager TXTDT_MG. As shown in Fig. 2, the text data manager TXTDT_MG has text data information TXTDTI, information pieces indicative of item text search pointers IT_TXT_SRP#1, #2, ···, and #n, and information pieces indicative of item texts IT_TXT. The text data information TXTDTI is followed by the information pieces indicative of the item text search pointers IT_TXT_SRP#1, #2, ···, and #n. The information pieces indicative of the item text search pointers IT_TXT_SRP#1, #2, ···, and #n are followed by the information pieces indicative of the item texts IT_TXT. There may be only one item text search pointer IT_TXT_SRP and only one item text IT_TXT.

There are items in the contents represented by the video data. The item texts IT_TXT relate to the respective items in the contents.

The text data information TXTDTI has an information piece indicating a designated character code set, and an information piece indicating the number "n" of the item text search pointers IT_TXT_SRP#1, #2, ···, and #n. The item text search pointers IT_TXT_SRP#1, #2, ···, and #n are assigned to the item texts IT_TXT, respectively. Each of the item text search pointers IT_TXT_SRP#1, #2, ···, and #n indicates the size of the corresponding item text IT_TXT, and an address of the head of the corresponding item text IT_TXT which is determined as viewed from the head of the text data manager TXTDT_MG.

Each information piece indicating an item text IT_TXT can be changed among different forms including those shown in Figs. 3, 4, and 5.

Fig. 3 shows a first form of one information piece indicating one item text IT_TXT. According to the form in Fig. 3, one information piece indicating one item text IT_TXT has a first segment representing a word of an ID (identification) code, a second segment representing the size of a text, and a third segment representing the text. The text means a set of letters and characters. The size of the text means the total number of letters and characters composing the text.

Fig. 4 shows a second form of one information piece indicating one item text IT_TXT. According to the form in Fig. 4, one information piece indicating one item text IT_TXT has a first segment representing a first ID code word, a second segment representing the size of a first text, a third segment representing the first text, a fourth segment representing a second ID code word, a fifth segment representing the size of a second text, and a sixth segment representing the second text. The size of the first text and the size of the second text may be set to "0" (in letter and character number).

Fig. 5 shows a third form of one information piece indicating one item text IT_TXT. According to the form in Fig. 5, one information piece indicating one item text IT_TXT has only a first segment representing an ID code word, and a second segment representing the size of a text which is set to "0". The text size being "0" denotes the absence of the text.

According to the DVD-VR standards, different words of the ID code are assigned to different item names respectively. The item names are separated into a first group (a first type) corresponding to the genre of the item, a second group (a second type) corresponding to the source providing the item, and a third group (a third type) corresponding to another matter.

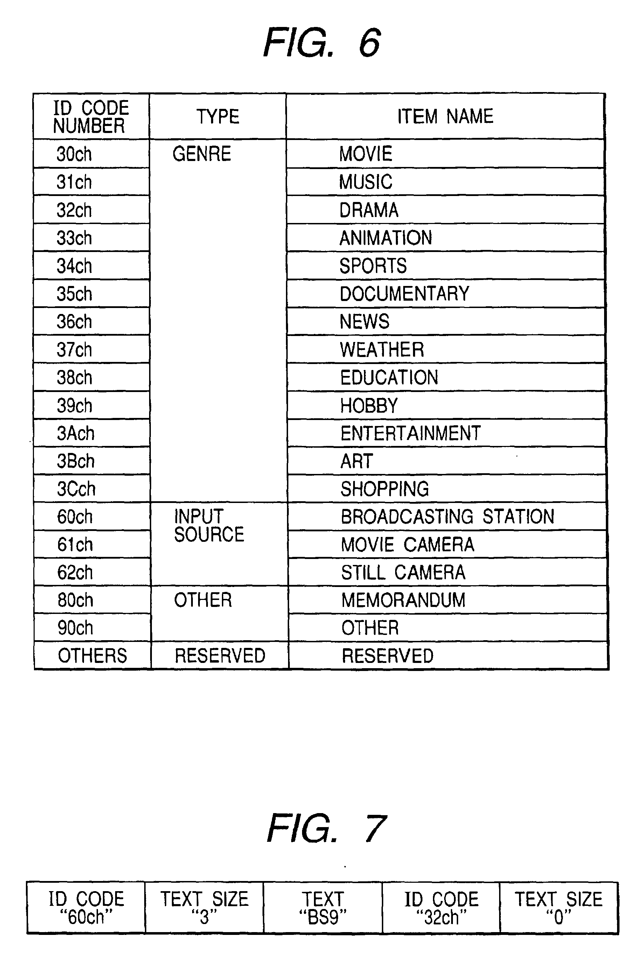

Fig. 6 shows the relation among the ID code numbers (the ID code words), the item types, and the item names which is prescribed by the DVD-VR standards. As shown in Fig. 6, an ID code number "30h" is assigned to an item name "movie" which is in the item-genre group. An ID code number "31h" is assigned to an item name "music" which is in the item-genre group. An ID code number "32h" is assigned to an item name "drama" which is in the item-genre group. An ID code number "33h" is assigned to an item name "animation" which is in the item-genre group. An ID code number "34h" is assigned to an item name "sports" which is in the item-genre group. An ID code number "35h" is assigned to an item name "documentary" which is in the item-genre group. An ID code number "36h" is assigned to an item name "news" which is in the item-genre group. An ID code number "37h" is assigned to an item name "weather" which is in the item-genre group. An ID code number "38h" is assigned to an item name "education" which is in the item-genre group. An ID code number "39h" is assigned to an item name "hobby" which is in the item-genre group. An ID code number "3Ah" is assigned to an item name "entertainment" which is in the item-genre group. An ID code number "3Bh" is assigned to an item name "art" which is in the item-genre group. Here, "art" means "theatrical performance" or "opera". An ID code number "3Ch" is assigned to an item name "shopping" which is in the item-genre group. An ID code number "60h" is assigned to an item name "broadcasting station" which is in the item-source group. An ID code number "61h" is assigned to an item name "movie camera" which is in the item-source group. An ID code number "62h" is assigned to an item name "still camera" which is in the item-source group. An ID code number "80h" is assigned to an item name "memorandum" which is in the item-other-matter group.

Fig. 7 shows a specific example of the details of one information piece indicating one item text IT_TXT. As shown in Fig. 7, one information piece indicating one item text IT_TXT has a first segment representing an ID code word of "60h", a second segment representing an item-text size of "3", a third segment representing a text of "BS9", and a fourth segment representing an ID code word of "32h", and a fifth segment representing a text size of "0". The item text IT_TXT in Fig. 7 indicates that the related item is a drama broadcasted by a station assigned to a channel of "BS9".

The item texts IT_TXT are linked with the original PGC and the user defined PGC or PGCs. In connection with the playback of the original PGC or the user defined PGC, the linked item texts IT_TXT can be indicated. For example, during the playback of the original PGC or the user defined PGC from the disc, the item texts IT_TXT linked therewith are detected and selected before being indicated on a display of a disc player.

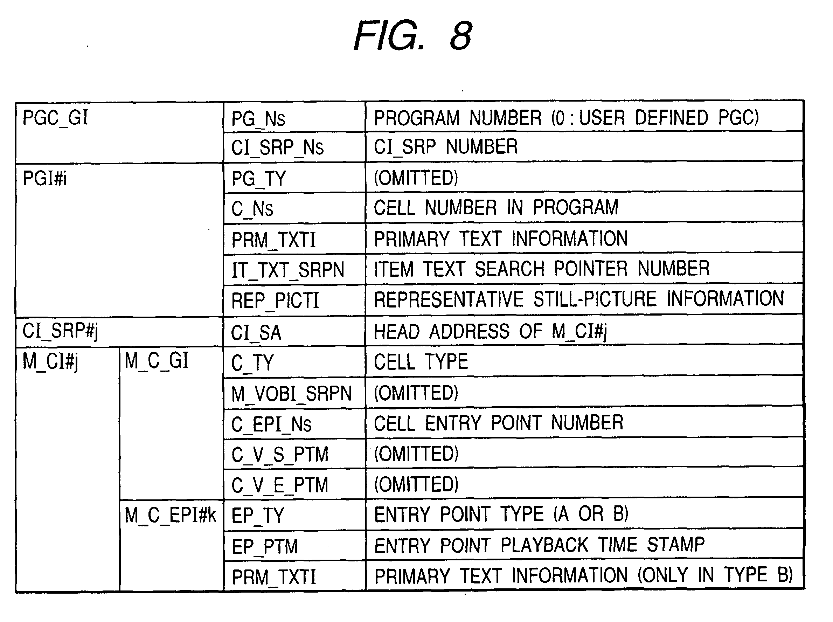

Fig. 8 shows the details of original PGC information (original PGCI) being data representing an original PGC. The original PGCI has general information PGC_GI of the original PGC, one or more attached information pieces PGI#i of respective related programs (programs in the contents), search pointers CI_SRP#j for cell information pieces in the original PGC, and cell information pieces M_CI#j of the respective related cells corresponding to moving pictures. The cell information pieces M_CI#j may be replaced by cell information pieces S_CI#j of the respective related cells corresponding to still pictures.

As previously mentioned, there is user defined PGC information (user defined PGCI) being data representing a user defined PGC. The structure of the user defined PGCI is basically similar to that of the original PGCI in Fig. 8. Specifically, the user defined PGCI has general information PGC_GI of the user defined PGC, search pointers CI_SRP#j for cell information pieces in the user defined PGC, and cell information pieces M_CI#j of the respective related cells corresponding to moving pictures. The cell information pieces M_CI#j may be replaced by cell information pieces S_CI#j of the respective related cells corresponding to still pictures. Attached information pieces PGI#i (see Fig. 8) are absent from the user defined PGCI.

Regarding each of the original PGCI and the user defined PGCI, the PGC general information PGC_GI contains an information piece representing the number PG_Ns of the programs in the related PGC, and an information piece representing the number CI_SRP_Ns of the search pointers CI_SRP#j. In the case of the user defined PGCI, the program number PG_Ns is equal to zero since a program is absent from the user defined PGC. The number of the attached information pieces PGI#i is equal to the program number PG_Ns. Thus, the variable "i" changes in the range as 1 ≦ i ≦ PG_Ns. Each attached information piece PGI#i contains a data piece representing the number C_Ns of cells in the related program, a data piece representing primary text information PRM_TXTI related to the program, a data piece representing a search pointer number IT_TXT_SRPN for item text information related to the program, and a data piece indicating representative sill-picture information REP_PICTI for designating the position of a still picture representative of the program. The item text information is stored in a data structure within the VR_MANGR.IFO file which separates from the original PGCI.

The number of the search pointers CI_SRP#j is equal to the number CI_SRP_Ns. Thus, the variable "j" changes in the range as 1 ≦ j ≦ Cl_SRP_Ns. Each search pointer CI_SRP#j has a data piece representing a head address CI_SA of the related cell information piece CI. Each cell information piece M_CI#j has data representing cell general information M_C_GI, and data representing one or more cell entry point information pieces M_C_EPI#k. The cell general information M_C_GI contains a data piece representing the type C_TY of the related cell, and a data piece representing the number C_EPI_Ns of cell entry points. Each cell entry point information piece M_C_EPI#k contains a data piece representing the type EP_TY of the related entry point, a data piece representing the playback time point (the playback time stamp) EP_PTM of the related entry point, and a data piece representing primary text information PRM_TXTI related to the entry point. The entry point type EP_TY can be changed between first one "A" void of primary text information PRM_TXTI and second one "B" having primary text information PRM_TXTI.

In the case of an original PGCI, specified one among item text search pointers IT_TXT_SRP#1, #2, ··· in a text data manager TXTDT_MG can be designated by a search pointer number IT_TXT_SRPN in each attached information piece PGI#i.

The DVD-VR standards are unsuited for the recording of high-quality linear PCM audio data on a disc. According to the DVD-VR standards, it is mandatory that each VOB contains a video stream. Thus, it is difficult to record only audio data on a disc. Regarding audio data, the DVD-VR standards support only 2-channel linear PCM audio data and compressed audio data. The DVD-VR standards do not support high-quality linear PCM audio data having more than 2 channels.

Therefore, to mainly record audio data on a DVD-RW disc or a DVD-RAM disc, it is necessary to provide a new method. Here, a conceivable DVD disc designed for mainly storing audio contents is referred to as a DVD audio recording disc (a DVD-AR disc). In an assumed case where a DVD-RW disc or a DVD-RAM disc is designed for not only use as a DVD-VR disc but also use as a DVD-AR disc, an important points to be considered are as follows. A common drive apparatus is assumed which supports both a DVD-VR disc and a DVD-AR disc. To make a greater part of the apparatus common to a DVD-VR disc and a DVD-AR disc, it is desirable that the data structures of the DVD-VR disc and the DVD-AR disc are similar to each other to a higher degree.

The assignment of the ID code words (the ID code words) to the item names in the item-genre group in Fig. 6 is designed for video use, and has a single-layer structure. The assignment in Fig. 6 is unsuited for audio use due to a point as follows. In general, the audio genre is selected from "pops", "rock-and-roll", "jazz", "fusion", "classical", and others. In some cases, it is desirable to provide a sub genre under a main genre. For example, when the main genre is "classical", the sub genre is selected from "symphony", "concerto", "chamber music", "piano solo", and others. The main/sub genre arrangement requires a hierarchical structure or a multi-layer structure. As previously mentioned, the assignment in Fig. 6 has a single-layer structure. Therefore, the assignment in Fig. 6 can not be properly diverted to audio use.

### First Embodiment

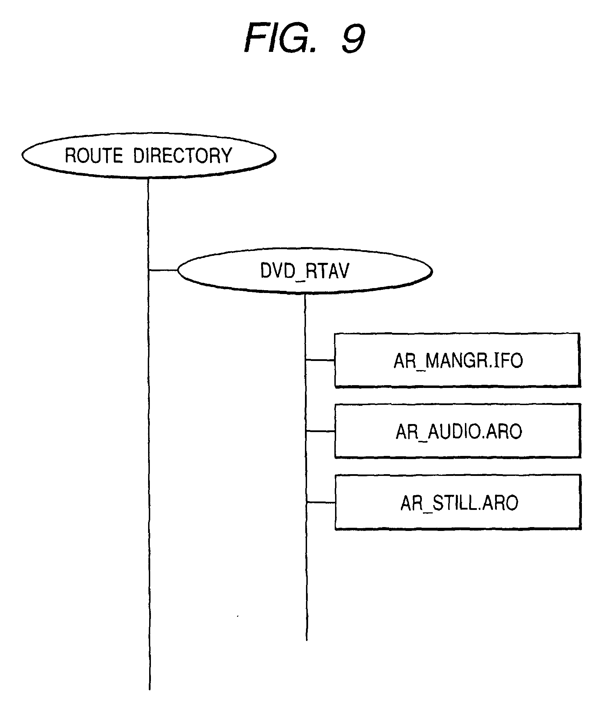

Fig. 9 shows the structure of directories and files on a DVD-AR disc according to an embodiment of this invention. The DVD-AR disc means a DVD audio recording disc, that is, a DVD disc designed for mainly storing audio contents. The DVD-AR disc is a modification of a DVD-VR disc. The DVD-AR disc is basically compatible with a DVD-VR disc. As shown in Fig. 9, there is a route directory under which a DVD_RTAV directory is placed as a sub directory. The DVD_RTAV directory contains an AR_MANGR.IFO file for storing all recording and reproducing management data including data representative of an original PGC (program chain) and data representative of a user defined PGC or PGCs.

The DVD_RTAV directory further contains an AR_AUDIO.ARO file and an AR_STILL.ARO file. Audio data are stored in the AR_AUDIO.ARO file as audio objects (AOBs) corresponding to VOBs in a DVD-VR disc. Still-picture data (data representing sill pictures) are stored in the AR_STILL.ARO file. The AR_MANGR.IFO file, the AR_AUDIO.ARO file, and the AR_STILL.ARO file correspond to the VR_MANGR.IFO file, the VR_MOVIE.VRO file, and the VR_STILL.VRO file in a DVD-VR disc, respectively. Since the recording and reproducing management data, the audio data, and the still-picture data are stored in files under the DVD_RTAV directory similar to that in a DVD-VR disc, it is easy to determine the relation between DVD-AR contents data and DVD-VR contents data. In this way, the contents data (including the audio data and the still-picture data) and the recording and reproducing management data are separately recorded on the disc on a file-by-file division basis. Thus, the order of reproducing the contents data can be decided by the user defined PGC or PGCs while the contents data remain unchanged.

The original PGC is used for sequentially reproducing AOBs from the disc in an order equal to that of the recording of the AOBs on the disc. Each user defined PGC relates to ones among the AOBs and portions of the AOBs which are selected by a user. The user defined PGC is used for sequentially reproducing the selected AOBs and the selected portions of the AOBs in an order desired by the user.

Similar to the VR_MANGR.IFO file in a DVD-VR disc, the AR_MANGR.IFO file includes a text data manager (a text data management structure) TXTDT_MG representing the type of the contents recorded on the disc. The type of the contents is determined by the genre of the contents and the source providing the contents. The genre of the contents includes a main genre and a sub genre in a hierarchical structure (a multi-layer structure). The sub genre is defined under the main genre. In other words, the sub genre is subordinate to the main genre. The text data manager TXTDT_MG has a structure basically similar to that in Fig. 2.

Accordingly, the text data manager TXTDT_MG has text data information TXTDTI, information pieces indicative of item text search pointers IT_TXT_SRP#1, #2, ···, and #n, and information pieces indicative of item texts IT_TXT (see Fig. 2).

There are items in the contents represented by the audio data. The item texts IT_TXT relate to the respective items in the contents.

The text data information TXTDTI has an information piece indicating a designated character code set, and an information piece indicating the number "n" of the item text search pointers IT_TXT_SRP#1, #2, ···, and #n. The item text search pointers IT_TXT_SRP#1, #2, ···, and #n are assigned to the item texts IT_TXT, respectively. Each of the item text search pointers IT_TXT_SRP#1, #2, ···, and #n indicates the size of the corresponding item text IT_TXT, and an address of the head of the corresponding item text IT_TXT which is determined as viewed from the head of the text data manager TXTDT_MG.

Each information piece indicating an item text IT_TXT has at least one segment representing a word of an ID (identification) code, and at least one segment representing the size of a text.

Different words of the ID code are assigned to different item names respectively. The item names are separated into a first group (a first type) corresponding to the main genre of an item in the contents recorded on the disc, a second group (a second type) corresponding to the sub genre of the item, a third group (a third type) corresponding to the source providing the item, and a fourth group (a fourth type) corresponding to another matter.

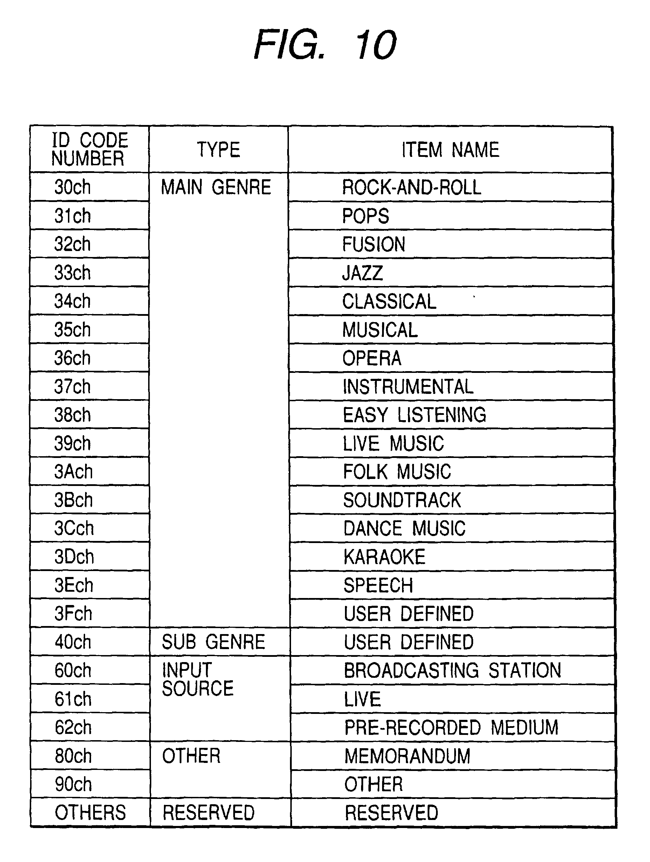

Fig. 10 shows the relation among the ID code numbers (the ID code words), the item types, and the item names. As shown in Fig. 10, an ID code number "30h" is assigned to a fixed item name "rock-and-roll" which is in the item-main-genre group. An ID code number "31h" is assigned to a fixed item name "pops" which is in the item-main-genre group. An ID code number "32h" is assigned to a fixed item name "fusion" which is in the item-main-genre group. An ID code number "33h" is assigned to a fixed item name "jazz" which is in the item-main-genre group. An ID code number "34h" is assigned to a fixed item name "classical" which is in the item-main-genre group. An ID code number "35h" is assigned to a fixed item name "musical" which is in the item-main-genre group. An ID code number "36h" is assigned to a fixed item name "opera" which is in the item-main-genre group. An ID code number "37h" is assigned to a fixed item name "instrumental" which is in the item-main-genre group. An ID code number "38h" is assigned to a fixed item name "easy listening" which is in the item-main-genre group. An ID code number "39h" is assigned to a fixed item name "live music" which is in the item-main-genre group. An ID code number "3Ah" is assigned to a fixed item name "folk music" which is in the item-main-genre group. An ID code number "3Bh" is assigned to a fixed item name "soundtrack" which is in the item-main-genre group. An ID code number "3Ch" is assigned to a fixed item name "dance music" which is in the item-main-genre group. An ID code number "3Dh" is assigned to a fixed item name "karaoke" which is in the item-main-genre group. An ID code number "3Eh" is assigned to a fixed item name "speech" which is in the item-main-genre group. An ID code number "3Fh" is assigned to a user defined item name which is in the item-main-genre group. An ID code number "40h" is assigned to a user defined item name which is in the item-sub-genre group. An ID code number "60h" is assigned to a fixed item name "broadcasting station" which is in the item-source group. An ID code number "61h" is assigned to a fixed item name "live" which is in the item-source group. An ID code number "62h" is assigned to a fixed item name "pre-recorded medium" which is in the item-source group. An ID code number "80h" is assigned to a fixed item name "memorandum" which is in the item-other-matter group.

When an ID code number is set to "3Fh", a related item text IT_TXT indicates a main genre arbitrarily decided or defined by a user. When an ID code number is set to "40h", a related item text IT_TXT indicates a sub genre arbitrarily decided or defined by the user.

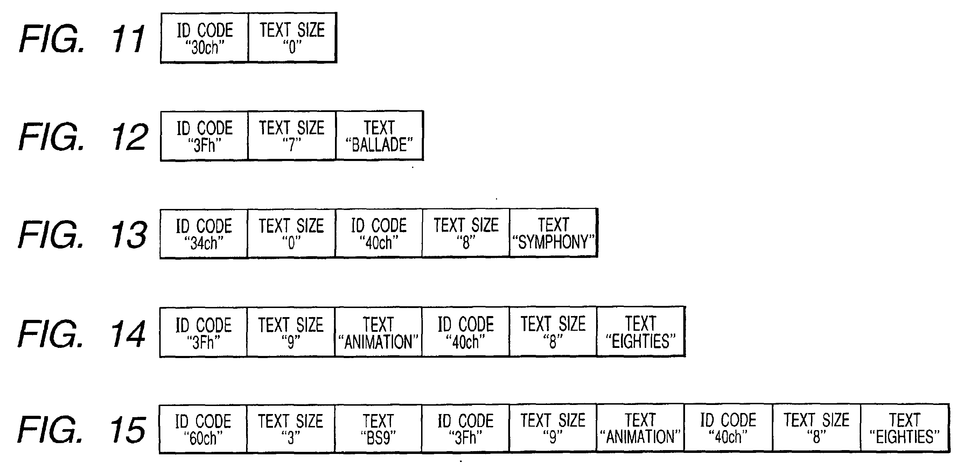

Each information piece indicating an item text IT_TXT can be changed among different forms including those shown in Figs. 11, 12, 13, 14, and 15.

Fig. 11 shows a first form of one information piece indicating one item text IT_TXT. According to the form in Fig. 11, one item-text information piece has only a first segment representing an ID code word, and a second segment representing the size of a text which is set to "0". The form in Fig. 11 is exclusive of a text. For example, when the ID code word is "30h", it is indicated that the main genre is "rock-and-roll".

Here, a text means a set of letters and characters. The size of a text means the total number of letters and characters composing the text. The text size being "0" means the absence of a text.

Fig. 12 shows a second form of one information piece indicating one item text IT_TXT. According to the form in Fig. 12, one item-text information piece has a first segment representing an ID code word, a second segment representing the size of a text, and a third segment representing the text. For example, when the ID code word is "3Fh", it is indicated that the main genre is defined by the user. For example, the text size is "7" (in letter and character number) while the text denotes a user defined item name "ballade" as the main genre.

Fig. 13 shows a third form of one information piece indicating one item text IT_TXT. According to the form in Fig. 13, one item-text information piece has a first segment representing a first ID code word, a second segment representing the size of a first text which is set to "0", a third segment representing a second ID code word, a fourth segment representing the size of a second text, and a fifth segment representing the second text. For example, when the first ID code word is "34h" and the second code word is "40h", it is indicated that the main genre is "classical" while the sub genre is defined by the user. For example, the second-text size is "8" (in letter and character number) while the second text denotes a user defined item name "symphony" as the sub genre.

Fig. 14 shows a fourth form of one information piece indicating one item text IT_TXT. According to the form in Fig. 14, one item-text information piece has a first segment representing a first ID code word, a second segment representing the size of a first text, a third segment representing the first text, a fourth segment representing a second ID code word, a fifth segment representing the size of a second text, and a sixth segment representing the second text. For example, when the first ID code word is "3Fh" and the second code word is "40h", it is indicated that the main genre and the sub genre are defined by the user. For example, the first-text size is "9" (in letter and character number) while the first text denotes a user defined item name "animation" as the main genre. For example, the second-text size is "8" (in letter and character number) while the second text denotes a user defined item name "eighties" as the sub genre.

Fig. 15 shows a fifth form of one information piece indicating one item text IT_TXT. According to the form in Fig. 15, one item-text information piece has a first segment representing a first ID code word, a second segment representing the size of a first text, a third segment representing the first text, a fourth segment representing a second ID code word, a fifth segment representing the size of a second text, a sixth segment representing the second text, a seventh segment representing a third ID code word, an eighth segment representing the size of a third text, and a ninth segment representing the third text. For example, when the first ID code word, the first-text size, and the first text are "60h", "3", and "BS9" respectively, it is indicated that the related item in the contents is a drama broadcasted by a station assigned to a channel of "BS9". For example, when the second ID code word is "3Fh" and the third ID code word is "40h", it is indicated that the main genre and the sub genre are defined by the user. For example, the second-text size is "9" (in letter and character number) while the second text denotes a user defined item name "animation" as the main genre. For example, the third-text size is "8" (in letter and character number) while the third text denotes a user defined item name "eighties" as the sub genre.

Preferably, the text size corresponding to an ID code word of "3Fh" (a user defined main genre) is equal to or greater than "1" in letter and character number. Preferably, the text size corresponding to an ID code word of "40h" (a user defined sub genre) is equal to or greater than "1" in letter and character number. Regarding an order of arrangement of ID code words in one item-text information piece, an ID code word of "40h" (a user defined sub genre) immediately follows an ID code word in the item-main-genre group.

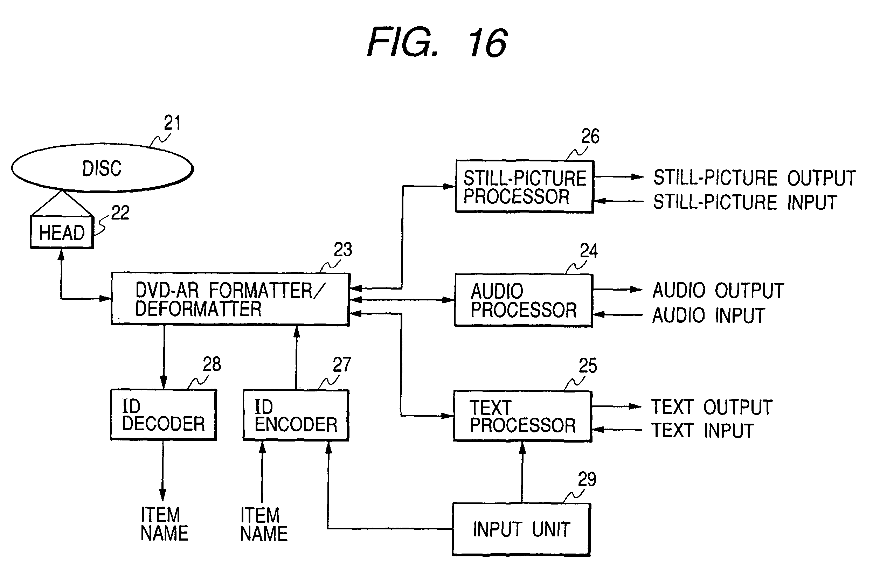

Fig. 16 shows a recording and reproducing apparatus (a recordable player or a disc drive) according to the embodiment of this invention. The apparatus of Fig. 16 can record and reproduce information on and from an information recording disc 21 equal to that mentioned with reference to Figs. 9-15.

The apparatus of Fig. 16 includes a head (a pickup) 22, a DVD-AR formatter/deformatter 23, an audio signal processor 24, a text signal processor 25, a still-picture signal processor 26, an ID encoder 27, an ID decoder 28, and an input unit 29.

The head 22 can access the recording disc 21. The head 22 is connected with the DVD-AR formatter/deformatter 23. The DVD-AR formatter/deformatter 23 may be basically equivalent to a DVD-VR formatter/deformatter. The DVD-AR formatter/deformatter 23 is connected with the audio signal processor 24, the text signal processor 25, the still-picture signal processor 26, the ID encoder 27, and the ID decoder 28. The text signal processor 25 is connected with the input unit 29. The ID encoder 27 is connected with the input unit 29. The input unit 29 can be actuated by the user.

During a recording mode of operation of the apparatus of Fig. 16, the audio signal processor 24 encodes an input audio signal into audio data of a predetermined format. The audio signal processor 24 feeds the audio data to the DVD-AR formatter/deformatter 23. The text signal processor 25 encodes an input text-indicating signal into text data of the predetermined format. The text signal processor 25 feeds the text data to the DVD-AR formatter/deformatter 23. The input unit 29 can generate a text-indicating signal when being actuated by the user. The generated text-indicating signal represents an item name (a main genre or a sub genre) defined by the user. The input unit 29 outputs the text-indicating signal to the text signal processor 25. The text signal processor 25 encodes the output signal of the input unit 29 into text data of the predetermined format. The text signal processor 25 feeds the text data to the DVD-AR formatter/deformatter 23. The still-picture signal processor 26 encodes an input still-picture-indicating signal into still-picture data of the predetermined format. The still-picture signal processor 26 feeds the still-picture data to the DVD-AR formatter/deformatter 23. The ID encoder 27 receives a signal indicating an item name related to the contents represented by the input audio signal. The ID encoder 27 includes a memory loaded with a code dictionary or a code book representing the assignment of ID code words to item names which is shown in Fig. 10. The device 27 encodes the item-name-indicating signal into a corresponding word of the ID code by referring to the code dictionary. The ID encoder 27 outputs the ID code word signal to the DVD-AR formatter/deformatter 23. The input unit 29 can generate an ID control signal when being actuated by the user 29. The generated ID control signal indicates that the main genre or the sub genre is defined by the user. The input unit 29 outputs the ID control signal to the ID encoder 27. The device 27 encodes the output signal of the input unit 29 into a corresponding word of the ID code by referring to the code dictionary. In this case, the ID code word is "3Fh" or "40h". The ID encoder 27 outputs the ID code word signal to the DVD-AR formatter/deformatter 23.

During the recording mode of operation of the apparatus of Fig. 16, the DVD-AR formatter/deformatter 23 makes the audio data, the text data, the still-picture data, and the ID code word signal into file data of a predetermined format corresponding to the DVD-AR format mentioned with reference to Figs. 9-15. In other words, the DVD-AR formatter/deformatter 23 combines the audio data, the text data, the still-picture data, and the ID code word signal into composite data of a predetermined format corresponding to the DVD-AR format mentioned with reference to Figs. 9-15. The DVD-AR formatter/deformatter 23 outputs the file data to the head 22. The head 22 records the file data on the recording disc 21.

During a playback mode of operation of the apparatus of Fig. 16, the head 22 reads out file data from the recording disc 21. The head 22 outputs the readout file data to the DVD-AR formatter/deformatter 23. The DVD-AR formatter/deformatter 23 deformats the readout file data into audio data, text data, still-picture data, and an ID code word signal. In other words, the DVD-AR formatter/deformatter 23 separates the readout file data into audio data, text data, still-picture data, and an ID code word signal. The DVD-AR formatter/deformatter 23 feeds the audio data to the audio signal processor 24. The DVD-AR formatter/deformatter 23 feeds the text data to the text signal processor 25. The DVD-AR formatter/deformatter 23 feeds the still-picture data to the still-picture signal processor 26. The DVD-AR formatter/deformatter 23 feeds the ID code word signal to the ID decoder 28.

During the playback mode of operation of the apparatus of Fig. 16, the audio signal processor 24 decodes the audio data into an audio signal. The audio signal processor 24 outputs the audio signal. The text signal processor 25 decodes the text data into a text-indicating signal. The text signal processor 25 outputs the text-indicating signal. The still-picture signal processor 26 decodes the still-picture data into a still-picture-indicating signal. The still-picture signal processor 26 outputs the still-picture-indicating signal. The ID decoder 28 includes a memory loaded with a code dictionary or a code book representing the assignment of ID code words to item names which is shown in Fig. 10. The device 28 decodes the ID code word signal into an item-name-indicating signal. The ID decoder 28 outputs the item-name-indicating signal.

The embodiment of this invention may be modified as follows. According to a modification, the text data manager TXTDT_MG contains a first item text IT_TXT and a second item text IT_TXT. The first item text IT_TXT includes a first ID code signal (a first ID code word) while the second item text IT_TXT includes a second ID code signal (a second ID code word). The first ID code signal indicates a main genre of contents represented by the audio data. The second ID code signal relates to a sub genre of the contents which is subordinate to the main genre. The first ID code signal is selected from ID code signals representing fixed main genres. The second ID code signal represents that the sub genre is defined by a user. The second item text IT_TXT includes a text indicating the sub genre defined by the user.

## Claims

1. An audio data recording disc storing audio data and a text data manager, the text data manager containing an item text, the item text including a first ID code signal and a second ID code signal, the first ID code signal indicating a main classification rank of an item type of contents represented by the audio data, the second ID code signal relating to a sub classification rank of the item type which is subordinate to the main classification rank.

2. An audio data recording disc as recited in claim 1, wherein the first ID code signal is selected from ID code signals representing fixed main genres and an ID code signal representing that a main genre of the contents is defined by a user, and the item text includes a text, and wherein when the first ID code signal is the ID code signal representing that the main genre of the contents is defined by the user, the text included in the item text indicates the main genre defined by the user.

3. An audio data recording disc as recited in claim 1, wherein the second ID code signal represents that a sub genre of the contents which is subordinate to a main genre thereof is defined by a user, and the item text includes a text indicating the sub genre defined by the user.

4. An audio data recording disc storing audio data and a text data manager, the text data manager containing a first item text and a second item text, the first item text including a first ID code signal, the second item text including a second ID code signal, the first ID code signal indicating a main genre of contents represented by the audio data, the second ID code signal relating to a sub genre of the contents which is subordinate to the main genre, wherein the first ID code signal is selected from ID code signals representing fixed main genres, and wherein the second ID code signal represents that the sub genre is defined by a user, and the second item text includes a text indicating the sub genre defined by the user.

5. An audio data recording disc storing audio data and a text data manager, the text data manager containing an item text, the item text including a first ID code signal and a second ID code signal, the first ID code signal indicating a main genre of an item in contents represented by the audio data, the second ID code signal relating to a sub genre of the item which is subordinate to the main genre.

6. An audio data recording disc as recited in claim 5, wherein the first ID code signal is selected from ID code signals representing fixed main genres and an ID code signal representing that the main genre is defined by a user, and the item text includes a text, and wherein when the first ID code signal is the ID code signal representing that the main genre is defined by the user, the text included in the item text indicates the main genre defined by the user.

7. An audio data recording disc as recited in claim 5, wherein the second ID code signal represents that the sub genre is defined by a user, and the item text includes a text indicating the sub genre defined by the user.
